Europäisches Patentamt

European Patent Office

Office européen des brevets

(11) Veröffentlichungsnummer: **0 457 066 A1**

## (12) EUROPÄISCHE PATENTANMELDUNG

(21) Anmeldenummer: 91106570.4

(22) Anmeldetag: 24.04.91

(51) Int. Cl.⁵: **F16K 31/08**

(30) Priorität: 18.05.90 DE 4016040

(43) Veröffentlichungstag der Anmeldung:
21.11.91 Patentblatt 91/47

(84) Benannte Vertragsstaaten:
AT BE CH DE DK ES FR IT LI SE

(71) Anmelder: **Deutsche Vortex GmbH**
**Erkelenzer Strasse 34**
**W-4050 Mönchengladbach 5(DE)**

(72) Erfinder: **Schmidt, Hans-Dieter**
**Wunnensteinstrasse 16/3**
**W-7148 Remseck 3(DE)**

(74) Vertreter: **Möhrke, Dieter, Dipl.-Ing.**
**Blumenberger Strasse 143/145**
**W-4050 Mönchengladbach 1(DE)**

(54) **Sperrventil.**

(57) Der Sperrkörper (11) des Sperrventils (1) ist mit einem Permanentmagneten (15) verbunden. Die Belastung des Sperrkörpers (11) wird durch einen zweiten Magneten (16) hervorgerufen, der durch eine das fluidische Medium gegen die Atmosphäre hermetisch abschließende Trennwand (22) hindurch mit magnetischer Abstoßungskraft auf den Magneten (15) einwirkt. Der Magnet (16) sitzt in einer Schiebehülse (24), die umsteckbar ist, so daß für Entlüftungszwecke der Sperrkörper (11) durch magnetische Kraft vom Ventilsitz (5) abgehoben werden kann. Die Schließkraft des Sperrkörpers (11) ist durch Verändern des Abstands der beiden Magnete voneinander veränderbar. Durch Umstecken der Hülse (24) kann das Ventil für Entlüftungszwecke geöffnet werden.

Fig. 1

Die Erfindung betrifft ein Sperrventil mit einem Ventilsitz und einem belasteten, mit dem Ventilsitz zusammenwirkenden beweglichen Sperrkörper.

Derartige Sperrventile werden beispielsweise in Brauchwasseranlagen als Rückschlagventile oder Rückström-Verhinderungsventile und in Brauchwasserzirkulations-Kreisläufen als Schwerkraftbremse verwendet.

Die bekannten Sperrventile sind mit erheblichen Nachteilen behaftet. Da die Belastung des Sperrkörpers durch Federn oder vergleichbare Elemente geschieht, sind diese Elemente dem fluidischen Medium ausgesetzt. Sie sind daher anfällig für Korrosion, Verkrustung, Verschmutzung oder dergleichen, wodurch sich die Belastung des Sperrkörpers unzulässig verändern kann oder der auf dem Ventilsitz aufliegende Sperrkörper in dieser Stellung verharrt, weil die Belastungsfeder im Lauf der Zeit verkrustet ist und nicht mehr richtig funktioniert.

Außerdem müssen Durchbrüche und daher potentielle Leckstelle vorgesehen sein, wenn man die Belastung von außen einstellbar machen will.

Der Erfindung liegt die Aufgabe zugrunde, hier Abhilfe zu schaffen und ein Sperrventil so auszubilden, daß gravierende Nachteile, wie potentielle Leckstellen, unwirksam werdende Belastung, Einschränkung der Beweglichkeit des Sperrkörpers vermieden oder zumindest stark eingeschränkt werden, dagegen aber die Konstanz der gewählten Belastung gewährleistet ist.

Gemäß der Erfindung wird diese Aufgabe dadurch gelöst, daß der Sperrkörper mit einem Permanentmagneten verbunden ist und daß die Belastung oder Entlastung des Sperrkörpers durch einen zweiten Magneten hervorgerufen wird, der durch eine das fluidische Medium gegen die Atmosphäre hermetisch abschließende Trennwand hindurch auf den mit dem Sperrkörper verbundenen Permanentmagneten einwirkt. Da zwei Magnete aufeinander einwirken, kann die Belastung beziehungsweise Entlastung des Sperrkörpers außer durch Wahl des Abstands des zweiten Magneten vom ersten Magneten auch durch den Wechsel der Polarität des zweiten Magneten verändert werden. Dadurch eröffnet sich auch die vorteilhafte Möglichkeit, das Sperrventil gelegentlich, beispielsweise für Entlüftungszwecke, durch Wechsel der Polarität des zweiten Magneten außer Funktion zu setzen.

Vorteilhaft wird eine Belastung des Sperrkörpers durch magnetische Abstoßungskraft, eine Entlastung oder ein Abheben des Sperrkörpers vom Ventilsitz durch magnetische Anziehungskraft zustande gebracht. Die Magnete sind dementsprechend gepolt und angeordnet.

In Weiterbildung der Erfindung ist der zweite Magnet in einem verstellbaren, die Wahl des Abstands des zweiten Magneten vom ersten Magneten und/oder die Wahl seiner Polarität bezüglich des ersten Magneten gewährleistenden Halter angeordnet.

Durch die Verstellbarkeit des Halters ist eine feinfühlige Einstellung der Belastung des Sperrkörpers möglich. Hierdurch eignet sich das erfindungsgemäße Sperrventil insbesondere auch für den Einsatz als Schwerkraftbremse in Brauchwasserzirkulationsanlagen. Das Sperrventil kann nunmehr auf einfache Weise und sehr betriebssicher auf eine die Brauchwasserzirkulation unterhaltende Pumpe geringer Leistung abgestimmt werden, die einen entsprechend geringen Öffnungsdruck des Sperrventils erfordert. Das erfindungsgemäße Sperrventil ermöglicht es, rasch und sicher eine derartige Belastung des beweglichen Sperrkörpers zu finden und zu erhalten, bei der in einer Brauchwasserzirkulationsanlage für den Fall, daß gerade kein Wasser gezapft wird, die Schwerkraftzirkulation gerade verhindert ist, wobei der Öffnungsdruck des Sperrkörpers jedoch noch nicht über der installierten Pumpenleistung einer verhältnismäßig leistungsschwachen Pumpe liegt.

Die Erfindung verhindert auch Schäden an Pumpen insofern, als sie eine Entlüftung einer Zirkulationsanlage über irgendeine der Entnahmestellen ermoglicht, indem durch Wechsel der Polarität des zweiten Magneten das Sperrventil außer Funktion gebracht wird, so daß die Luft durch das offene Sperrventil hindurch über die Entnahmestelle entweichen kann. Durch Wechseln der Polarität des zweiten Magneten wird der Sperrkörper vom Ventilsitz abgehoben und dadurch der Durchgang während der Entlüftung gewährleistet.

In Weiterbildung der Erfindung besteht der Halter aus einer drehbaren und/oder längsverschiebbaren, den Ventilkörper übergreifenden Hülse. Die Hülse besitzt vorteilhaft zwei offene Hülsenenden, wobei der zweite Magnet in der Hülse so angeordnet ist, daß durch Umstecken der Hülse die Polarität des zweiten Magneten bezüglich derjenigen des ersten Magneten veränderbar ist.

Der Halter ist vorteilhaft mit dem Ventilkörper oder der Trennwand verschraubt. Die Verschraubung dient zum einen der Justierung, zum anderen aber auch der Arretierung der einmal gefundenen Einstellung der Belastung beziehungsweise der Polarität.

In Weiterbildung der Erfindung ist vorgesehen, daß infolge der Verschraubung durch Drehen des Halters der Abstand des zweiten Magneten vom ersten Magneten veränderbar und/oder die Polarität des zweiten Magneten bezüglich der Polarität des ersten Magneten umkehrbar ist.

In älteren Anlagen mit Eisenrohren besteht die Gefahr, daß magnetisch leitfähige Partikel in den Kreislauf geraten, beispielsweise Korrosionspartikel. Damit derartige Partikel sich nicht in der Nähe des Magneten ansammeln, ist in Weiterbildung der Erfindung vorgesehen, daß der den Magneten tragende Teil des Sperrkörpers von einer mit dem Ventilkörper verbundenen mit dem fluidischen Medium gefüllten, aber ein betriebsmäßiges Umströmen des Magneten durch das Medium verhindernden oder zumindest stark behindernden Tasche umgeben ist. Die Strömung geht dann an der Tasche vorbei und mitgeführte magnetisch leitfähige Partikel kommen nicht in die Nähe des Magneten.

In manchen Fällen ist es vorteilhaft, wenn die Strömung möglichst geradlinig durch das Sperrventil geht, wenn das Sperrventil geöffnet ist. Um dies zu ermöglichen, ist in Weiterbildung der Erfindung vorgesehen, daß der Ventilkörper aus einem Spaltrohr besteht und daß die beide Magnete trennende Trennwand aus einem quer durch das Spaltrohr gehenden Rohr besteht, dessen Außendurchmesser kleiner ist als der Innendurchmesser des Spaltrohrs. Bei geöffnetem Sperrventil geht die Strömung durch den spaltförmigen Freiraum zwischen Ventilkörper und Sperrkörper, sowie durch den links und rechts des Querrohrs vorhandenen Freiraum.

In Weiterbildung der Erfindung besteht der Halter für den zweiten Magneten aus einem in dem die Trennwand bildenden Rohr angeordneten, den zweiten Magneten tragenden Stift. Der Stift kann beispielsweise eingesteckt und wieder entfernt werden, er kann gegen einen anderen Stift ausgetauscht werden, der einen schwächeren oder stärkeren Magneten aufweist, er kann herausgezogen und um 180 Grad gedreht und wieder eingesteckt werden, um die Polarität des Magneten bezüglich derjenigen des ersten Magneten zu verändern.

In Weiterbildung der Erfindung sind Rohr und Stift zwecks Änderung der Polarität und/oder der auf den ersten Magneten wirkenden magnetischen Kräfte mit zueinander passenden Schraubgewinden versehen. Der Stift kann beispielsweise stirnseitig einen Schlitz aufweisen, in den ein Schraubendreher paßt, mit dem der Stift gedreht werden kann. Durch Drehen ändert sich zunächst die Stärke der magnetischen Kraft. Es ist demnach nicht erforderlich, den Mittenabstand der Magnete voneinander zu verändern, wenn man die Möglichkeit hat, den zweiten Magneten feinfühlig zu drehen und in der gefundenen Stellung dann zu belassen. Beim Weiterdrehen ändert sich schließlich die Polarität.

In Weiterbildung der Erfindung ist die den Sperrkörper umgebende Tasche als Führung für den Sperrkörper ausgebildet. Die Tasche ist vorteilhaft zentral im Spaltrohr derartig angeordnet, daß sie bei geöffnetem Ventil von dem fluidischen Medium umströmt ist.

Ausführungsbeispiele der Erfindung sind in den Zeichnungen dargestellt.

Anhand dieser Ausführungsbeispiele wird die Erfindung näher beschrieben und erläutert.

Fig. 1  zeigt einen Längsschnitt durch ein geschlossenes Sperrventil.

Fig. 2  zeigt das gleiche Sperrventil, jedoch bei veränderter Anordnung des zweiten Magneten.

Fig. 3  zeigt das in Fig. 1 dargestellte Sperrventil in einem durch Umstecken des zweiten Magneten erzwungenen geöffneten Zustand.

Fig. 4  zeigt einen Längsschnitt durch ein anderes Sperrventil.

Fig. 5  zeigt das in Fig. 4 dargestellte Sperrventil in einem durch Ändern der Polarität des zweiten Magneten erzwungenen geöffneten Zustand.

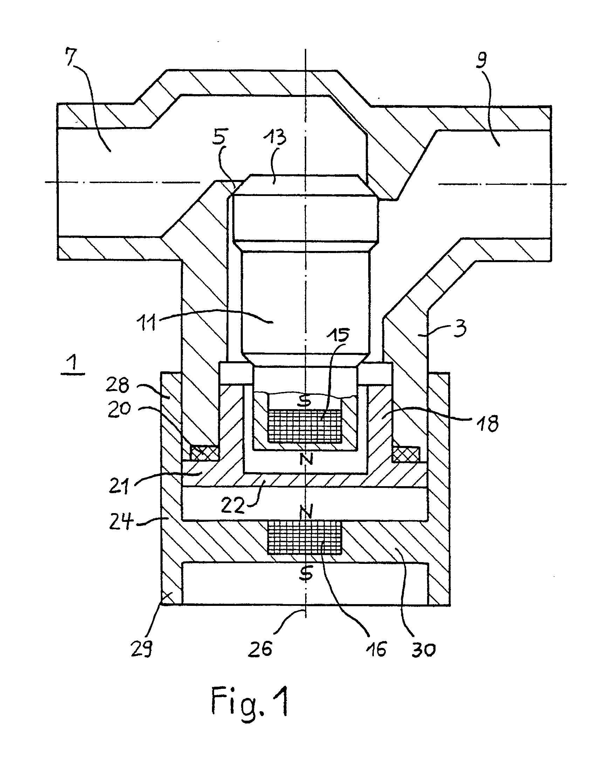

Das in den Fig. 1 bis 3 dargestellte Sperrventil 1 besitzt einen Ventilkörper 3, in dem ein ringförmiger Ventilsitz 5, ein Einlaßstutzen 7 und ein Auslaßstutzen 9 ausgebildet ist. Der Sperrkörper 11 besitzt einen zum Ventilsitz 5 passenden Ventilkegel 13. An dem dem Ventilkegel 13 abgewandten Ende ist in den Sperrkörper 11 ein Permanentmagnet 15 eingebettet. Sein Südpol S ist dem Ventilkegel 13 zugewandt. Sein Nordpol N ist entgegengesetzt gerichtet.

Der den Magneten 15 tragende Teil des Sperrkörpers 11 ist von einer mit dem Ventilkörper 3 verbundenen, betriebsmäßig mit dem fluidischen Medium gefüllten, aber ein betriebsmäßiges Umströmen des Magneten 15 durch das Medium verhindernden oder zumindest behindernden Tasche 18 umgeben. Diese den Sperrkörper 11 umgebende Tasche 18 ist zugleich als Führung für den Sperrkörper 11 ausgebildet, und sie umgibt aus diesem Grund den unteren Teil des Sperrkörpers 11 unter Freilassen eines verhältnismäßig geringen Ringspaltes ringförmig.

Die Tasche 18 ist unter Beilage eines Dichtrings 20 so in den Ventilkörper 3 eingepreßt, daß ihr ringförmiger Rand 21 gegen den Dichtring 20 und gegen das untere Ende des Ventilkörpers 3 anliegt.

Die Belastung des Sperrkörpers 11 wird durch einen zweiten Magneten 16 hervorgerufen, der durch eine das fluidische Medium gegen die Atmosphäre hermetisch abschließende Trennwand 22 hindurch auf den mit dem Sperrkörper 11 verbundenen Permanentmagneten 15 einwirkt. Die Trennwand 22 wird durch den Boden der Tasche 18 gebildet. Der zweite Magnet 16 ist in einem verstellbaren, die Wahl des Abstands des zweiten Magneten 16 vom ersten Magneten 15 und auch die Wahl seiner Polarität bezüglich der Polarität des ersten Magneten 15 gewährleistenden Halter 24 angeordnet. Der Halter 24 besteht aus einer längsverschiebbaren, den Ventilkörper übergreifenden Hülse, in deren Längsachse 26, die mit der Längsachse des Sperrkörpers 11 übereinstimmt, der zweite Magnet 16 angeordnet ist.

Die Hülse 24 hat zwei offene Hülsenenden 28 und 29. Der zweite Magnet 16 ist in der Hülse 24 so angeordnet, daß durch Umstecken der Hülse 24 die Polarität des zweiten Magneten 16 bezüglich derjenigen des ersten Magneten 15 veränderbar ist.

Nach Fig. 1 wird die Belastung des Sperrkörpers 11 durch magnetische Abstoßungskraft zustande gebracht. Hierzu ist der Nordpol N des Magneten 16 gegen den Nordpol N des Magneten 15 gerichtet. Der Magnet 16 sitzt gut geschützt in einem Zwischenboden 30 der Hülse 24.

Die Hülse 24 ist mit Schiebesitz über den Ventilkörper 3 geschoben, so daß der jeweils eingestellte Abstand des Magneten 16 von der Trennwand 22 erhalten bleibt und sich nicht beispielsweise durch Erschütterungen von selbst verändert.

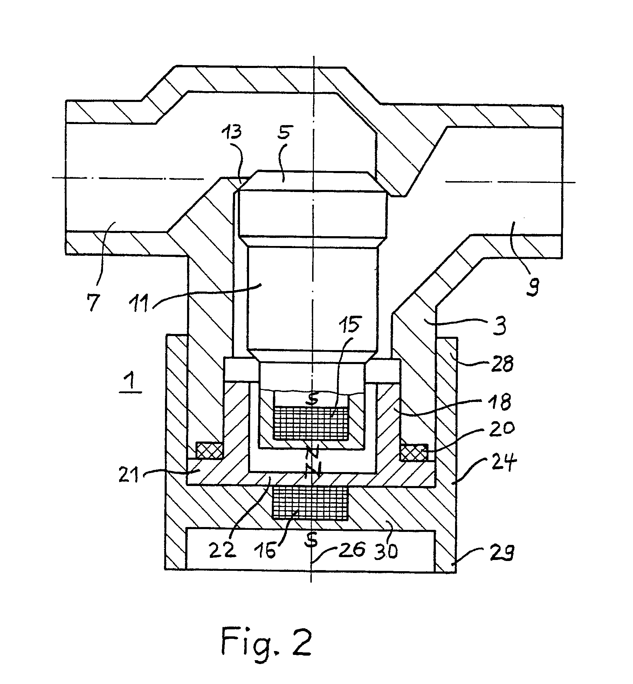

Während nach Fig. 1 der Magnet 16 von der Trennwand 22 einen Abstand von etwa 1 cm hat, liegt er nach Fig. 2 direkt an der Trennwand 22 an, weil die Hülse 24 entsprechend weit über den Ventilkörper 3 geschoben wurde. Dadurch ist bei der Anordnung nach Fig. 2 die magnetische Abstoßungskraft größer, demnach die Schließkraft des Sperrkörpers 11 ebenfalls größer.

Zum Entlüften des Rohrsystems, in dem sich das Sperrventil 1 befinden kann, wird das Sperrventil 1 auf folgende Art und Weise außer Funktion gesetzt:

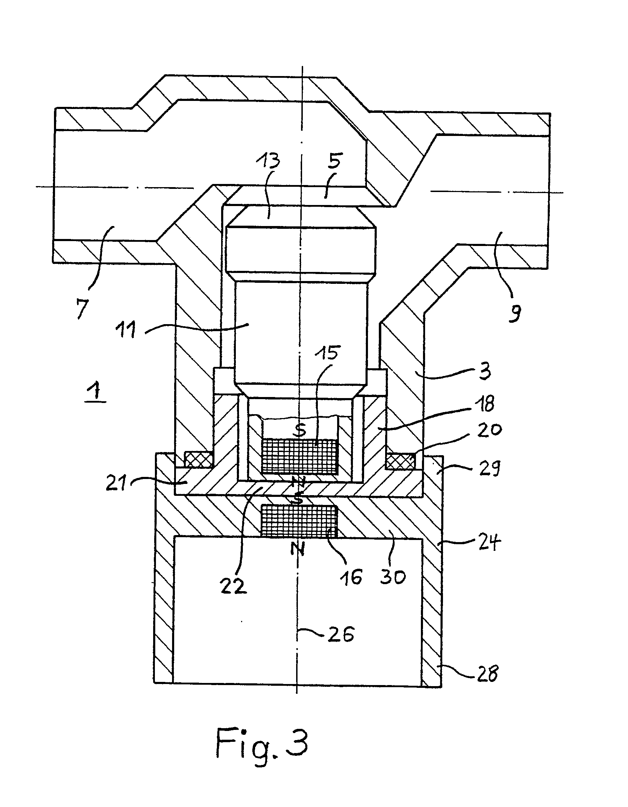

Die Hülse 24 wird vom Ventilkörper 3 abgezogen und mit ihrem Hülsenende 29 voran wieder auf den Ventilkörper 3 aufgesteckt, wie es Fig. 3 zeigt. Nun befindet sich der Südpol des Magneten 16 gegenüber dem Nordpol des Magneten 15, wodurch eine verhältnismäßig starke magnetische Anziehungskraft zustande gebracht wird. Sie ist so stark, daß sich der Ventilkegel 13 des Sperrkörpers 11 vom Ventilsitz 5 abhebt. Durch den freien Durchgang des Ventils kann nun das Rohrsystem beispielsweise über eine Zapfstelle entlüftet werden. Nach Beenden des Entlüftungsvorgangs, der beispielsweise anläßlich einer Inbetriebnahme oder Wiederinbetriebnahme nach Beseitigung einer Störung erforderlich ist, kann das Sperrventil 1 durch Umstecken der Hülse 24 wieder in Betrieb genommen werden.

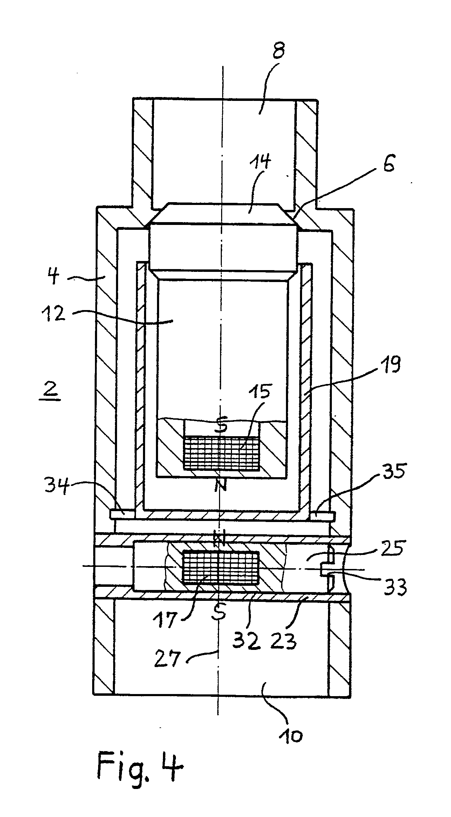

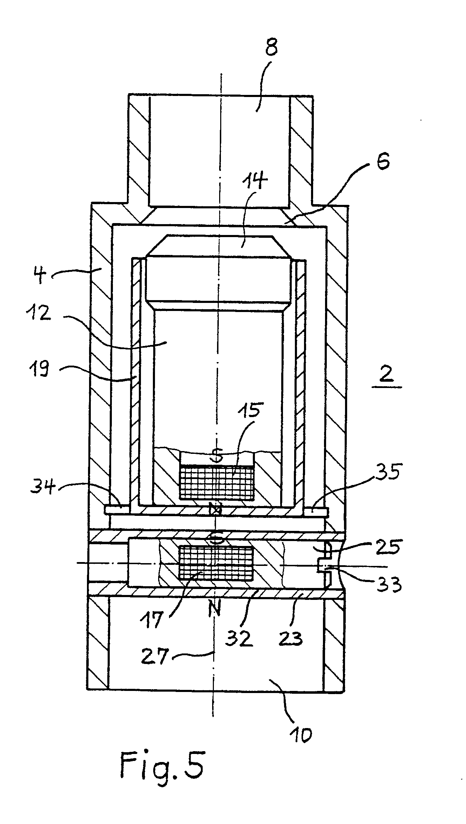

Bei der Ausbildung der Erfindung nach den Fig. 4 und 5 besteht der Ventilkörper 4 aus einem Spaltrohr. Die beide Magnete 15 und 17 trennende Trennwand 23 besteht hier aus einem quer durch das Spaltrohr 4 gehenden Rohr, dessen Außendurchmesser kleiner ist als der Innendurchmesser des Spaltrohrs 4.

Der Halter 25 besteht hier aus einem in dem die Trennwand bildenden Rohr 23 angeordneten, den zweiten Magneten 17 tragenden Stift. Rohr 23 und Stift 25 können an der Fuge 32 mit zueinander passenden Schraubgewinden versehen sein. Zum Einführen und Herausnehmen beziehungsweise zum Drehen ist der Stift 25 mit einem Schlitz 33 versehen, in den ein Schraubendreher paßt.

In dem Ventilkörper 4 des Sperrventils 2 ist nach den Fig. 4 und 5 ein Einlaßstutzen 8, ein Auslaßstutzen 10 und ein Ventilsitz 6 ausgebildet. Der Sperrkörper 12 ist konzentrisch zur Längsachse 27 des Spaltrohrs 4 angeordnet. Er besitzt einen zum Ventilsitz 6 passenden Ventilkegel 14. In das dem Ventilkegel 14 abgewandte Ende des Sperrkörpers 12 ist der Permanentmagnet 15 derartig geschützt eingesetzt, daß er mit dem fluidischen Medium betriebsmäßig nicht in Berührung kommt.

Auch bei dieser Variante ist die den Sperrkörper 12 umgebende Tasche 19 als Führung für den Sperrkörper 12 ausgebildet. Sie ist zentral im Spaltrohr 4 angeordnet und sie wird bei geöffnetem Ventil, wie es Fig. 5 zeigt, von dem fluidischen Medium umströmt. Mit Hilfe von Stegen 34 und 35 ist die Tasche 19 im Spaltrohr 4 von dessen Wandungen auf Distanz gehalten.

Bei der Anordnung nach Fig. 4 liegt der Nordpol des Magneten 17 dem Nordpol des Magneten 15 gegenüber. Zwischen den beiden Magneten herrschen demnach magnetische Abstoßungskräfte, so daß der Ventilkegel 14 am Sitz 6 anliegt und das Sperrventil 2 geschlossen ist.

Nach Drehen des Stiftes 25 um 180 Grad liegt der Südpol des Magneten 17 dem Nordpol des Magneten 15 gegenüber, wodurch sich beide Magnete kräftig anziehen. Die Folge ist das Abheben des Ventilkegels 14 vom Sitz 6, wie es Fig. 5 zeigt. Hierdurch ist ebenfalls wieder eine Entlüftungsmöglichkeit für das Rohrsystem geschaffen, in das das Sperrventil eingesetzt ist. Nach dem Entlüften wird der Magnet 17 wieder so gedreht, daß sein Nordpol dem Nordpol des Magneten 15 gegenüberliegt.

**Patentansprüche**

1. Sperrventil mit einem Ventilsitz und einem belasteten, mit dem Ventilsitz zusammenwirkenden beweglichen Sperrkörper,
   **dadurch gekennzeichnet,**
   daß der Sperrkörper (11, 12) mit einem Permanentmagneten (15) verbunden ist und daß die Belastung oder Entlastung des Sperrkörpers (11, 12) durch eine zweiten Magneten (16, 17) hervorgerufen wird, der durch eine das fluidische Medium gegen die Atmosphäre hermetisch abschließende Trennwand (22, 23) hindurch auf den mit dem Sperrkörper (11, 12) verbundenen Permanentmagneten (15) einwirkt.

2. Sperrventil nach Anspruch 1, dadurch gekennzeichnet, daß eine Belastung des Sperrkörpers (11, 12) durch magnetische Abstoßungskraft, eine Entlastung oder ein Abheben des Sperrkörpers (11, 12) vom Ventilsitz (5, 6) durch magnetische Anziehungskraft zustande gebracht wird, und daß die Magnete (15, 16, 17) dementsprechend gepolt und angeordnet sind.

3. Sperrventil nach Anspruch 1 oder 2, dadurch gekennzeichnet, daß der zweite Magnet (16, 17) in einem verstellbaren, die Wahl des Abstands des zweiten Magneten (16, 17) vom ersten Magneten (15) und/oder die Wahl seiner Polarität bezüglich der Polarität des ersten Magneten (15) gewährleistenden Halter (24, 25) angeordnet ist.

4. Sperrventil nach Anspruch 3, dadurch gekennzeichnet, daß der Halter (24) aus einer längsverschiebbaren und/oder drehbaren, den Ventilkörper (3) übergreifenden Hülse besteht.

5. Sperrventil nach Anspruch 4, dadurch gekennzeichnet, daß die Hülse (24) zwei offene Hülsenenden (28, 29) besitzt und daß der zweite Magnet (16) in der Hülse (24) so angeordnet ist, daß durch Umstecken der Hülse (24) die Polarität des zweiten Magneten (16) bezüglich derjenigen des ersten Magneten (15) veränderbar ist.

6. Sperrventil nach einem der Ansprüche 3 bis 5, dadurch gekennzeichnet, daß der Kalter (24, 25) mit dem Ventilkörper (3) oder der Trennwand (23) verschraubt ist.

7. Sperrventil nach Anspruch 6, dadurch gekennzeichnet, daß infolge der Verschraubung durch Drehen des Halters (24, 25) der Abstand des zweiten Magneten (16, 17) vom ersten Magneten (15) veränderbar und/oder die Polarität des zweiten Magneten (16, 17) bezüglich der Polarität des ersten Magneten (15) umkehrbar ist.

8. Sperrventil nach einem der Ansprüche 1 bis 7, dadurch gekennzeichnet, daß der den Magneten (15) tragende Teil des Sperrkörpers (11, 12) von einer mit dem Ventilkörper (3, 4) verbundenen, betriebsmäßig mit dem fluidischen Medium gefüllten, aber ein betriebsmäßiges Umströmen des Magneten (15) durch das Medium verhindernden oder zumindest stark behindernden Tasche (18, 19) umgeben ist.

9. Sperrventil nach einem der Ansprüche 1 bis 8, dadurch gekennzeichnet, daß der Ventilkörper (4) aus einem Spaltrohr besteht und daß die beide Magnete (15, 17) trennende Trennwand (23) aus einem quer durch das Spaltrohr (4) gehenden Rohr besteht, dessen Außendurchmesser kleiner ist als der Innendurchmesser des Spaltrohrs (4).

10. Sperrventil nach Anspruch 9, dadurch gekennzeichnet, daß der Halter (25) aus einem in dem die Trennwand bildenden Rohr (23) angeordneten, den zweiten Magneten (17) tragenden Stift besteht.

11. Sperrventil nach Anspruch 10, dadurch gekennzeichnet, daß das Rohr (23) und der Stift (25) zwecks Änderung der Polarität und/oder der auf den ersten Magneten (15) wirkenden magnetischen Kräfte mit zueinander passenden Schraubgewinden (32) versehen sind.

12. Sperrventil nach einem der Ansprüche 8 bis 11, dadurch gekennzeichnet, daß die den Sperrkörper (11, 12) umgebende Tasche (18, 19) als Führung für den Sperrkörper (11, 12) ausgebildet ist.

13. Sperrventil nach einem der Ansprüchge 9 bis 12, dadurch gekennzeichnet, daß die den Sperrkörper (12) umgebende Tasche (19) zentral im Spaltrohr (4) derartig angeordnet ist, daß sie bei geöffnetem Ventil (2) von dem fluidischen Medium umströmt ist.

EP 0 457 066 A1

Fig. 1

Fig. 2

Fig.3

Fig. 4

Fig.5

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | US-A-2 609 669 (W.R. EDDY)<br>* Spalte 2, Zeile 44 - Spalte 3, Zeile 28; Spalte 6, Zeilen 57-64; Figur 3 *<br>— — — | 1,2 | F 16 K 31/08 |
| Y | US-A-2 667 895 (S.D. POOL et al.)<br>* Spalte 2, Zeile 9 - Spalte 3, Zeile 33 *<br>— — — | 2 | |
| Y | GB-A-1 444 393 (BOC INTERNATIONAL)<br>* Seite 2, Zeilen 5-63; Figur 1 *<br>— — — | 2 | |
| A | DE-A-3 338 111 (BRAN & LÜBBE)<br>— — — — — | | |

|  | RECHERCHIERTE SACHGEBIETE (Int. Cl.5) |
|---|---|
| | F 16 K |

Der vorliegende Recherchenbericht wurde für alle Patentansprüche erstellt

| Recherchenort | Abschlußdatum der Recherche | Prüfer |
|---|---|---|
| Den Haag | 20 August 91 | CHRISTENSEN C.W. |